# EUROPEAN PATENT APPLICATION

(11) **EP 4 462 549 A1**
(43) Date of publication of application: **13.11.2024**
(21) Application number: 23888960.4
(22) Date of filing: 17.10.2023
(51) Int. Cl.: H01M 10/42, G01K 7/02, G01N 25/72

(54) **BATTERY SAFETY EVALUATION DEVICE**

(30) Priority: 09.11.2022 KR 20220148296
(71) Applicant: LG Energy Solution, Ltd., Seoul 07335 (KR)
(72) Inventor: HWANG, Dongguk, Daejeon 34122 (KR); CHOI, Nak Hee, Daejeon 34122 (KR); KIM, Kyung Min, Daejeon 34122 (KR); LEE, Byoungsoo, Daejeon 34122 (KR); PARK, Kwangyeon, Daejeon 34122 (KR)
(74) Representative: Goddar, Heinz J.
(86) International application number: PCT/KR2023/015994
(87) International publication number: WO 2024/101697

(57) **Abstract**

The present invention relates to a battery safety evaluation device characterized by comprising: a mounting plate having an upper surface on which a battery is fixed; a chamber part in which a battery accommodation space is formed to accommodate the mounting plate; a temperature sensor unit provided in the battery accommodation space; and a temperature analysis unit that receives a temperature measurement signal from the temperature sensor unit at regular time intervals. The temperature sensor unit is provided in plurality, and the plurality of temperature sensor units are inside the battery accommodation space and are spaced apart from each other at a certain distance.

## Description

### Technical Field

The present application claims the benefit of priority based on Korean Patent Application No. 10-2022-0148296 filed on November 9, 2022, the entire disclosure of which is incorporated as a part of this specification.

The present disclosure relates to a battery safety evaluation apparatus, and to a battery safety evaluation apparatus capable of quantitatively analyzing location and temperature of gas and flame emitted from a battery over time.

### Background Art

A sealed chamber is used to ensure the safety of researchers during battery experiments that have the risk of ignition and explosion, as well as to collect and analyze gases generated from the battery. At this time, the composition and amount of gas generated from the battery vary in real time depending on the kinetic characteristics (SOC, battery temperature, evaluation atmospheric environmental conditions, etc.). In addition, as the composition and amount of the gas change, the physical properties of the gas, such as temperature and density, also change.

Identifying the location and temperature distribution of gas and flame emitted outside the battery when excessive gas is generated inside the battery or when the battery ignites is very important in designing the battery itself and a device containing the battery.

Conventionally, a thermal imaging camera was used to measure the temperature distribution of the gas and flame generated and emitted from a battery.

When installing a thermal imaging camera inside a chamber for battery analysis, the thermal imaging camera may be damaged by harsh conditions within the chamber, and it was difficult to operate a cooling device for the thermal imaging camera inside the chamber.

When the thermal imaging camera is installed outside the chamber for battery analysis, a window made of a material capable of transmitting infrared rays is required by the chamber, and chambers designed in consideration of explosion-proof, and the like, have limitations in the size of the window, so there was also a limit to the scale of measurement.

Therefore, an effective technology is required to analyze real-time temperature distribution due to gas and flame emitted from the battery located inside the chamber.

### Disclosure of the Invention

### Technical Goals

The present disclosure relates to a battery safety evaluation apparatus, and is to provide a battery safety evaluation apparatus capable of quantitatively analyzing location and temperature of gas and flame emitted from a battery over time.

Technical objects to be achieved by the present disclosure are not limited to the technical objects mentioned above, and other technical objects that are not mentioned will be clearly understood by those skilled in the art from the description below.

### Technical Solutions

A battery safety evaluation apparatus of the present disclosure may include:
a mounting plate, the mounting plate comprising an upper surface for fixing a battery;
a chamber unit, the chamber unit comprising a battery accommodation space for accommodating the mounting plate;
a temperature sensor unit in the battery accommodation space; and
a temperature analysis unit that receives temperature measurement signals periodically from the plurality of temperature sensor units,
wherein the temperature sensor units may comprise a plurality of temperature sensor units, and
the plurality of temperature sensor units may be provided to be spaced apart from each other within the battery accommodation space.

### Advantageous Effects

A battery safety evaluation apparatus of the present disclosure may be capable of effectively analyzing real-time temperature distribution due to gas and flame emitted from a battery located inside a chamber.

A battery safety evaluation apparatus of the present disclosure may be capable of quantifying location and temperature of the gas and flame emitted from the inside of the battery to the outside over time.

A battery safety evaluation apparatus of the present disclosure may maximize the reproducibility of analysis by minimizing parts consumed for repeated measurements.

### Brief Description of Drawings

FIG. 1 is a cross-sectional view illustrating a battery safety evaluation apparatus of the present disclosure.
FIG. 2 is a plan view illustrating a positional relationship between a temperature sensor unit and a battery.
FIG. 3 is a cross-sectional view illustrating a chamber unit.
FIG. 4 is a perspective view illustrating an embodiment in which a temperature sensor unit is coupled to a mounting plate.
FIG. 5 is a perspective view illustrating an embodiment in which a battery is fixed to a mounting plate.

### Best Mode for Carrying Out the Invention

A battery safety evaluation apparatus of the present disclosure may include:
a mounting plate, the mounting plate comprising an upper surface for fixing a battery;
a chamber unit, the chamber unit comprising a battery accommodation space for accommodating the mounting plate;
a temperature sensor unit in the battery accommodation space; and
a temperature analysis unit that receives temperature measurement signals periodically from the temperature sensor unit,
wherein the temperature sensor units may comprise a plurality of temperature sensor units, and
the plurality of temperature sensor units may be spaced apart from each other within the battery accommodation space.

The mounting plate of the battery safety evaluation apparatus of the present disclosure may be plate shaped, has a width in a first direction, and extends in a second direction, wherein the second direction is perpendicular to the first direction and the first direction and the second direction are perpendicular to the vertical direction.

In the battery safety evaluation apparatus of the present disclosure, at least one of the plurality of temperature sensor units may be arranged on a first virtual line extending in the second direction; and at least one of the plurality of temperature sensor units may be arranged on a second virtual line extending in the second direction, wherein the battery is between the first virtual line and the second virtual line.

In the battery safety evaluation apparatus of the present disclosure, a temperature sensor of the plurality of temperature sensor units may be located at an intersection of the first virtual line and a third virtual line extending in the first direction; a temperature sensor of the plurality of temperature sensor units may be located at an intersection of the second virtual line and the third virtual line; a temperature sensor of the plurality of temperature sensor units may be located at an intersection of the first virtual line and a fourth virtual line extending in the first direction; and a temperature sensor of the plurality of temperature sensor units may be located at an intersection of the second virtual line and the fourth virtual line, wherein the battery is between the third virtual line and the fourth virtual line.

In the battery safety evaluation apparatus of the present disclosure, a temperature sensor of the plurality of temperature sensor units may be located at an intersection of the first virtual line and a fifth virtual line extending in the first direction; and a temperature sensor of the plurality of temperature sensor units may be located at an intersection of the second virtual line and the fifth virtual line, and the fifth virtual line is between one end of the battery and the other end of the battery.

In the battery safety evaluation apparatus of the present disclosure, there may be a plurality of the fifth virtual lines.

In the battery safety evaluation apparatus of the present disclosure, the temperature sensor unit may be a rod shaped and extends in the vertical direction.

In the battery safety evaluation apparatus of the present disclosure, the temperature sensor unit may include a first measurement point and a second measurement point, wherein the first measurement point may be above the mounting plate, and the second measurement point may be below the mounting plate.

In the battery safety evaluation apparatus of the present disclosure, the temperature sensor unit may further include a third measurement point located between the first measurement point and the second measurement point, and the third measurement point may be above the mounting plate.

In the battery safety evaluation apparatus of the present disclosure, the chamber unit may include a body unit in which one end in the second direction is opened to form an opening and the battery accommodation space is formed inside, and a door unit coupled to the body unit and configured to cover the opening, wherein one end of the mounting plate in the second direction may be coupled to a surface of the door unit facing the opening, and the other end of the mounting plate in the second direction may be in the battery accommodation space.

In the battery safety evaluation apparatus of the present disclosure, an upper end of a temperature sensor unit of the plurality of temperature sensor units may be fixed to a ceiling surface of the chamber unit, and a spacing between the first virtual line and the second virtual line may be longer than a length of the mounting plate in the first direction.

In the battery safety evaluation apparatus of the present disclosure, a temperature sensor unit of the plurality of temperature sensor units may be fixed to the mounting plate in a state of penetrating the mounting plate, and a spacing between the first virtual line and the second virtual line may be shorter than a length of the mounting plate in the first direction and longer than a length of the battery in the first direction.

In the battery safety evaluation apparatus of the present disclosure, the door unit may include a feed-through for connecting the plurality of temperature sensor units to the temperature analysis unit by wire.

The battery safety evaluation apparatus of the present disclosure may further include a lower jig with a bottom surface fixed on the upper surface of the mounting plate; a first insulating layer between the battery and the lower jig; an upper jig for pressurizing the upper surface of the battery; a second insulating layer between the upper jig and the upper surface of the battery; a bottom surface temperature measurement sensor between the first insulating layer and the battery; and an upper surface temperature measurement sensor between the second insulating layer and the battery.

The battery safety evaluation apparatus of the present disclosure may further include a first fixing means for fixing the upper jig to the lower jig; and a second fixing means for fixing the lower jig to the mounting plate.

### Modes for Carrying Out the Invention

Hereinafter, embodiments according to the present disclosure will be described in detail with reference to the attached drawings. In this process, the size or shape of components shown in the drawings may be exaggerated for clarity and convenience of explanation. In addition, terms specifically defined in consideration of the configuration and operation of the present disclosure may vary depending on the intention or custom of a user or an operator. Definitions of these terms should be made based on the content throughout this specification.

In the description of the present disclosure, it should be noted that an orientation or positional relationship indicated by the terms such as "center", "upper", "lower", "left", "right", "vertical", "horizontal", "inner side", "outer side", "one side", and "other side" is based on an orientation or positional relationship shown in a drawing or an orientation or positional relationship that is placed when using the product of the present disclosure on a daily basis, and is merely for explanation and brief description of the present disclosure, and it does not suggest or imply that the displayed device or element must necessarily be configured or operated in a specified orientation and should not be construed as limiting the present disclosure.

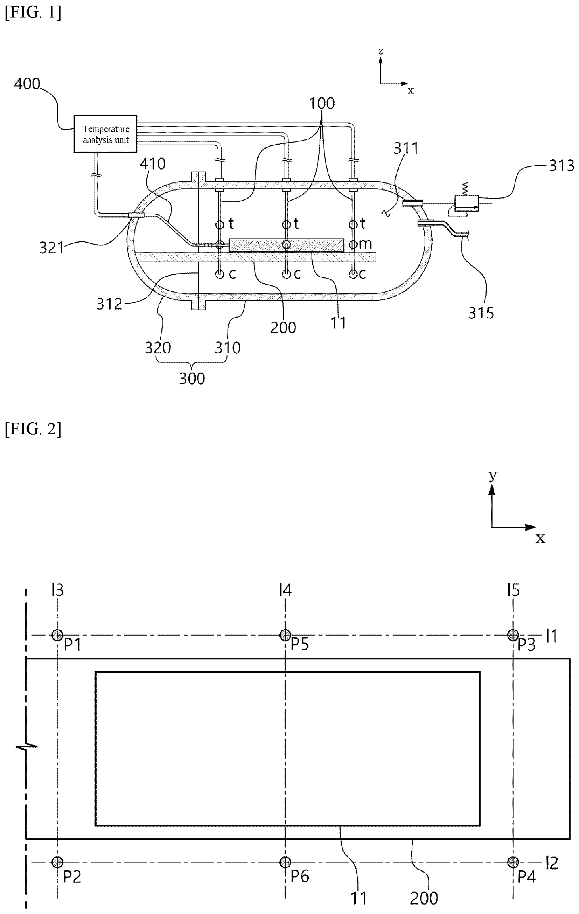

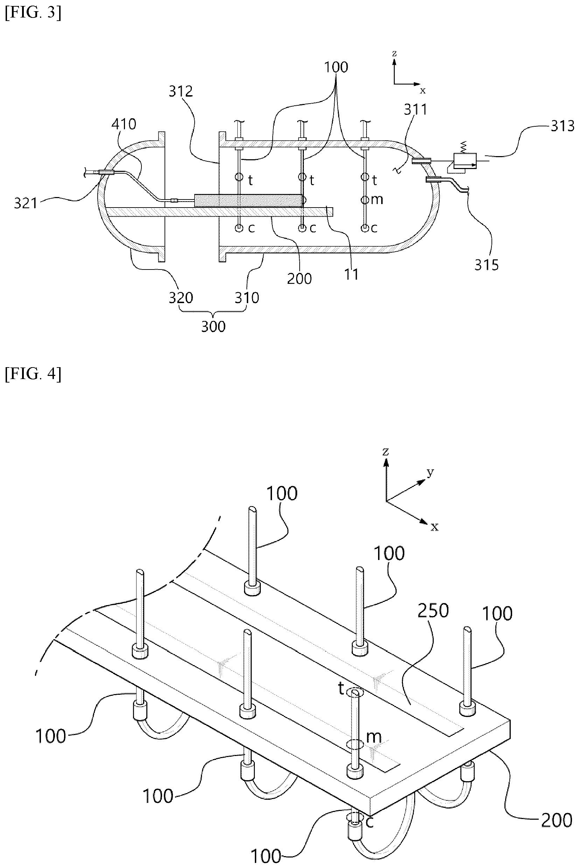

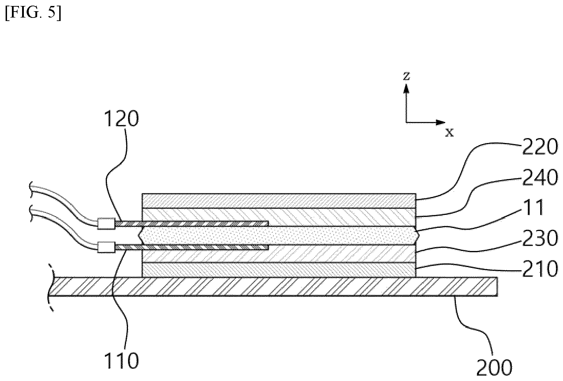

FIG. 1 is a cross-sectional view illustrating a battery safety evaluation apparatus of the present disclosure. FIG. 2 is a plan view illustrating a positional relationship between a temperature sensor unit 100 and a battery 11. FIG. 3 is a cross-sectional view illustrating a chamber unit 300. FIG. 4 is a perspective view illustrating an embodiment in which the temperature sensor unit 100 is coupled to a mounting plate 200. FIG. 5 is a perspective view illustrating an embodiment in which the battery 11 is fixed to the mounting plate 200.

Hereinafter, with reference to FIGS. 1 to 5, battery safety evaluation apparatuses of the present disclosure will be described in detail. In FIGS. 1 to 5, the y-axis direction may be a first direction, the x-axis direction may be a second direction, and the z-axis direction may be a vertical direction. The vertical direction, which is the z-axis direction, may be the direction of gravity. For example, gravity may act to bring a bottom surface of the battery 11 into close contact with an upper surface of the mounting plate 300.

As shown in FIG. 1, a battery safety evaluation apparatus of the present disclosure may include:
the mounting plate 200, the battery 11 being fixed on an upper surface of the mounting plate 200;
the chamber unit 300 in which a battery accommodation space 311 to accommodate the mounting plate 200 is formed inside;
the temperature sensor unit 100 provided in the battery accommodation space 311; and
a temperature analysis unit 400 that receives temperature measurement signals as input at a predetermined time period from the temperature sensor unit 100,
wherein a plurality of the temperature sensor units 100 may be provided, and
the plurality of temperature sensor units 100 may be provided to be spaced a predetermined distance apart from each other within the battery accommodation space 311.

The battery safety evaluation apparatus of the present disclosure may dispose the plurality of temperature sensor units 100 around the battery 11 within the sealed chamber unit 300, collect temperature measurement values at a predetermined time period from the plurality of temperature sensor units 100 disposed, and calculate thermal mapping data as time series data indicating situations in which the battery 11 is damaged in situations such as explosion or leakage of the battery 11.

In other words, it may be possible to analyze safety of a local position of the battery 11 by analyzing emission and movement of heat for each position of the battery 11.

The temperature analysis unit 400 may receive the temperature measurement values output from the temperature sensor units 100. The temperature analysis unit 400 may store position information and identification codes for each of the plurality of temperature sensor units 100. The temperature measurement value received from the plurality of temperature sensor units 100 may be stored by matching the identification code corresponding to each of the plurality of temperature sensor units 100.

The temperature analysis unit 400 may receive temperature measurement values from the temperature sensor units 100 at a predetermined time period and calculate temperature analysis data as time series data.

The temperature analysis unit 400 may be a computing device. The temperature analysis unit 400 may be connected to a display device and may output temperature analysis data to the display device.

The temperature analysis unit 400 may be located outside the chamber unit 300, and a feed-through 321 may be provided on a wall of the chamber unit 300 for electrical connection with the temperature sensor unit 100, a charge/discharge cable 410, a heater inside the chamber unit 300, or the like. The temperature analysis unit 400 may forcibly impose conditions such as explosion or damage on the battery 11 by controlling a charge/discharge module, a heater, or the like.

The mounting plate 200 may be provided in a plate shape having a constant width in a first direction perpendicular to a vertical direction and extending in a second direction perpendicular to the vertical direction and the first direction. The battery 11 may be mounted on the upper surface of the mounting plate 200. The battery 11 may be fixed by directly contacting the mounting plate 200, or may be fixed to the mounting plate 200 through an upper jig 220 and a lower jig 210, which will be described later.

In the battery safety evaluation apparatus of the present disclosure, the battery 11 to be analyzed may be, for example, a pouch-type battery 11. Specifically, it may be the battery 11 including flat shape electrodes (anode, cathode) perpendicular to the vertical direction. More specifically, the electrode may be provided in a rectangular shape with a side length in the second direction longer than that in the first direction.

As shown in FIG. 2, when a pair of virtual straight lines extending in the second direction with the battery 11 in between are referred to as a first virtual line I1 and a second virtual line l2, at least one of the plurality of temperature sensor units 100 may be arranged on each of the first virtual line 11 and the second virtual line l2. On each of the first virtual line 11 and the second virtual line l2, 2 to 10 temperature sensor units 100 may be arranged. For example, 3 or 7 temperature sensor units 100 may be arranged on each of the first virtual line 11 and the second virtual line l2 of the temperature sensor unit 100. The number of temperature sensor units 100 arranged on each of the first virtual line 11 and the second virtual line l2 may be determined by considering conditions such as the standard, material, and structure of the battery 11, or insulation and explosion-proof of the structure to which the battery 11 is applied and installed.

A spacing between the first virtual line 11 and the second virtual line l2 may be 110% to 150% of a length of the battery 11 in the first direction. For example, the interval between the first virtual line 11 and the second virtual line l2 may be 240 mm to 360 mm. The interval between the first virtual line 11 and the second virtual line l2 may be about 300 mm. The battery safety evaluation method of the present disclosure may be to determine the temperature around the battery 11 in real time and analyze thermal behavior in a situation where the battery 11 explodes or ignites. In other words, the chamber unit 300 may be formed to have an explosion-proof structure that may withstand high pressure, high heat, explosion, and the like, during analysis. For example, the chamber unit 300 may be provided in a cylindrical shape extending in the second direction for the explosion-proof structure. At this time, if the first virtual line 11 and the second virtual line l2 becomes excessively far apart, the volume of the battery accommodation space 311 of the chamber unit 300 may become excessively large because the temperature sensor unit 100 may also be provided in a rod shape extending in the vertical direction. In this case, a space in which a battery-generated gas generated inside the battery 11 diffuses becomes larger, which may make it difficult to analyze the battery-generated gas. In addition, if the temperature sensor unit 100 is located too close to the battery 11, when the battery 11 explodes or ignites, the temperature sensor unit 100 may be damaged, or the temperature sensor unit 100 itself may affect the airflow around the battery 11. Accordingly, the interval between the first virtual line 11 and the second virtual line l2 may be 110% to 150% of the length of the battery 11 in the first direction.

As shown in FIG. 2, when a pair of virtual straight lines extending in the first direction with the battery 11 in between are referred to as a third virtual line l3 and a fourth virtual line l4, the plurality of temperature sensor units 100 may be disposed at an intersection point P1 of the third virtual line l3 and the first virtual line 11, an intersection point P2 of the third virtual line l3 and the second virtual line l2, an intersection point P3 of the fourth virtual line l4 and the first virtual line 11, and an intersection point P4 of the fourth virtual line l4 and the second virtual line l2. A spacing between the third virtual line l3 and the fourth virtual line l4 may be 110% to 150% of a length of the battery 11 in the second direction. For example, the interval between the third virtual line l3 and the fourth virtual line l4 may be 1 640 mm to 960 mm. For example, the interval between the third virtual line l3 and the fourth virtual line l4 may be l about 800 mm.

When a pair of virtual straight lines located between one end and the other end of the battery 11 and extending in the first direction are referred to as a fifth virtual line 15, the plurality of temperature sensor units 100 may be further disposed at an intersection point P5 of the fifth virtual line l5 and the first virtual line l1, and an intersection point P6 of the fifth virtual line l5 and the second virtual line l2.

At the center of the first virtual line 11 and the second virtual line l2, a sixth virtual line (not shown), which is a straight line extending in the second direction, may be located, and the temperature sensor unit 100 may be located at each of the intersection point between the sixth virtual line and the third virtual line l3, and the intersection point between the sixth virtual line and the fourth virtual line l4.

When the battery 11 is formed to be very long along the major axis (second direction), a plurality of the fifth virtual lines l5 may be provided. For example, there may be five fifth virtual lines l5, and a total of 16 temperature sensor units 100 may be provided. In the battery safety evaluation apparatus of the present disclosure, one temperature sensor unit 100 may have 3 measurement points, as will be described later. Therefore, in the battery accommodation space 311 of the battery safety evaluation apparatus of the present disclosure, temperature may be measured at 48 points, and the temperature measurement value may be provided as time series data (temperature-time graph) for each of the 48 points.

As shown in FIGS. 1 and 3, the temperature sensor unit 100 may be provided in a rod shape extending in the vertical direction. The temperature sensor unit 100 may be a thermocouple (TC) with high heat resistance. One temperature sensor unit 100 may include a plurality of temperature measurement points.

Specifically, the temperature sensor unit 100 may include a first measurement point (t) and a second measurement point (b), wherein the first measurement point (t) may be located at a higher position than the mounting plate 200, and the second measurement point (b) may be located at a lower position than the mounting plate 200. More specifically, the first measurement point (t) may be located at a higher position than an upper surface of the battery 11, and the second measurement point (b) may be located at a lower position than the bottom surface of the battery 11.

The temperature sensor unit 100 may further include a third measurement point (m) located between the first measurement point (t) and the second measurement point (b), wherein the third measurement point (m) may be located at a higher position than the mounting plate 200. More specifically, the third measurement point (m) may be formed at a position facing the side surface of the battery 11.

Therefore, each of the plurality of temperature sensor units 100 may have three temperature measurement points, and for example, when six temperature sensor units 100 are provided, the temperature analysis unit 400 may output temperature measurement data for a total of 18 points. For example, 18 graphs of temperature over time may be output from the temperature analysis unit 400.

As shown in FIGS. 1 and 3, the chamber unit 300 may include a body unit 310 in which one end in the second direction is opened to form an opening 312 and the battery accommodation space 311 is formed inside, and a door unit 320 coupled to the body unit 310 and configured to cover the opening 312, wherein one end of the mounting plate 200 in the second direction may be coupled to a surface of the door unit 320 facing the opening 312, and the other end of the mounting plate 200 in the second direction may be inserted into the battery accommodation space 311 through the opening 312.

The door unit 320 may be coupled to or separated from the body unit 310 while sliding in the second direction and moving linearly.

When the door unit 320 is slid to approach the body unit 310, the mounting plate 200 may move together with the door unit 320 and be inserted into the battery accommodation space 311 through the opening 312. When the door unit 320 is slid to be separated from the body unit 310, the mounting plate 200 may move together with the door unit 320 and be discharged from the battery accommodation space 311.

The body unit 310 may be an explosion-proof chamber. The body unit 310 may be provided in a cylindrical shape with an opening 312 formed at one end in the second direction and extending in the second direction. The body unit 310 may be connected to a relief valve 313 to relieve a high pressure of the battery accommodation space 311, and a gas delivery pipe 315 for delivering the gas diffused in the battery accommodation space 311 to an external gas collection pipe or gas analysis device.

In an embodiment, as shown in FIGS. 1 and 3, upper ends of the plurality of temperature sensor units 100 may be fixed to a ceiling surface of the chamber unit 300, and a spacing between the first virtual line I1 and the second virtual line I2 may be longer than a length of the mounting plate 200 in the first direction. In other words, the plurality of temperature sensor units 100 may be arranged side by side in two rows (first virtual line 11 and second virtual line l2) and fixed to the body unit 310, and the mounting plate 200, when inserted into the battery accommodation space 311, may be inserted between the two rows of the first virtual line 11 and the second virtual line l2.

The door unit 320 may be provided in a hemisphere or disk shape. To a side surface of the door unit 320 (a surface facing the opening 312 of the body unit 310), the mounting plate 200 may be fixed. A plurality of the feed-throughs 321 may be provided in the door unit 320.

As another embodiment, as shown in FIG. 4, the plurality of temperature sensor units 100 may be fixed to the mounting plate 200 in a state of penetrating the mounting plate 200, and the interval between the first virtual line 11 and the second virtual line l2 may be shorter than the length of the mounting plate 200 in the first direction and longer than the length of the battery 11 in the first direction. In other words, the plurality of temperature sensor units 100 may move together with the door unit 320. At this time, the door unit 320 may be provided with the feed-through 321 for connecting the plurality of temperature sensor units 100 and the temperature analysis unit 400 by wire.

In the mounting plate 200, a ventilation hole 250 for air flow in the vertical direction may be formed. For example, the ventilation hole 250 may be provided in the shape of a long hole extending in the second direction.

As shown in FIG. 5, the battery safety evaluation apparatus of the present disclosure may further include:
the lower jig 210 with a bottom surface fixed on the upper surface of the mounting plate 200;
a first insulating layer 230 stacked between the battery 11 and the lower jig 210;
a second insulating layer 240 stacked on the upper surface of the battery 11;
the upper jig 220 for pressurizing the upper surface of the battery 11 with the second insulating layer 240 in between;
a bottom surface temperature measurement sensor 110 inserted between the first insulating layer 230 and the battery 11; and
an upper surface temperature measurement sensor 120 inserted between the second insulating layer 240 and the battery 11.

The upper jig 220 and lower jig 210 may prevent the battery 11 from leaving its original position, and the temperature of the battery 11 itself may be measured by attaching the upper surface temperature measurement sensor 120 and the bottom surface temperature measurement sensor 110 to the battery 11.

The upper jig 220 and lower jig 210 may be Al plates.

The upper surface temperature measurement sensor 120 and the bottom surface temperature measurement sensor 110 may be rod-shaped thermocouples.

A temperature measurement sensor insertion groove may be formed on an upper surface of the first insulating layer 230 and a bottom surface of the second insulating layer 240, so that the first insulating layer 230 and the second insulating layer 240 may be prevented from lifting from the surface of the battery 11 by the upper surface temperature measurement sensor 120 and the bottom surface temperature measurement sensor 110.

The battery safety evaluation apparatus of the present disclosure may further include a first fixing means for fixing the upper jig 220 to the lower jig 210; and a second fixing means for fixing the lower jig 210 to the mounting plate 200. The first fixing means and the second fixing means may be bolts, nuts, or the like, for screw connection.

Although embodiments according to the present disclosure have been described above, they are merely illustrative, and those skilled in the art will understand that various modifications and embodiments of an equivalent scope are possible therefrom. Therefore, the true technical protection scope of the present disclosure should be determined by the appended claims.

<Explanation of Symbols> 11...Battery, 100...Temperature sensor unit, 110...Bottom surface temperature measurement sensor, 120...Upper surface temperature measurement sensor, 200...Mounting plate, 210...Lower jig, 220...Upper jig, 230...First insulating layer, 240...Second Insulating layer, 250...Ventilation hole, 300...Chamber unit, 310...Body unit, 311...Battery accommodation space, 312...Opening, 313...Relief valve, 315...Gas delivery pipe, 320...Door unit, 321...Feed-through, 400...Temperature analysis unit, 410...Charge/discharge cable, l1...First virtual line, l2...Second virtual line, l3...Third virtual line, l4...Fourth virtual line, l5...Fifth virtual line, t...First measurement point, b... Second measurement point, m...Third measurement point

### Industrial Applicability

A battery safety evaluation apparatus of the present disclosure may be capable of effectively analyzing real-time temperature distribution due to gas and flame emitted from a battery located inside a chamber.

A battery safety evaluation apparatus of the present disclosure may be capable of quantifying location and temperature of the gas and flame emitted from the inside of the battery to the outside over time.

A battery safety evaluation apparatus of the present disclosure may maximize the reproducibility of analysis by minimizing the parts consumed for repeated measurements.

## Claims

1. A battery safety evaluation apparatus comprising:
a mounting plate, the mounting plate comprising an upper surface for fixing a battery;
a chamber unit, the chamber unit comprising a battery accommodation space for accommodating the mounting plate;
a plurality of temperature sensor units in the battery accommodation space; and
a temperature analysis unit that receives temperature measurement signals periodically from the plurality of temperature sensor units,
the temperature sensor units are spaced apart from each other within the battery accommodation space.

2. The battery safety evaluation apparatus of claim 1, wherein
the mounting plate is plate shaped, has a width in a first direction, and extends in a second direction,
wherein the second direction is perpendicular to the first direction and the first direction and the second direction are perpendicular to a vertical direction.

3. The battery safety evaluation apparatus of claim 2, wherein:
at least one of the plurality of temperature sensor units is arranged on a first virtual line extending in the second direction; and
at least one of the plurality of temperature sensor units is arranged on a second virtual line extending in the second direction, wherein the battery is between the first virtual line and the second virtual line.

4. The battery safety evaluation apparatus of claim 3, wherein:
a temperature sensor of the plurality of temperature sensor units is located at an intersection of the first virtual line and a third virtual line extending in the first direction;
a temperature sensor of the plurality of temperature sensor units is located at an intersection of the second virtual line and the third virtual line;
a temperature sensor of the plurality of temperature sensor units is located at an intersection of the first virtual line and a fourth virtual line extending in the first direction; and
a temperature sensor of the plurality of temperature sensor units is located at an intersection of the second virtual line and the fourth virtual line, wherein the battery is between the third virtual line and the fourth virtual line.

5. The battery safety evaluation apparatus of claim 4, wherein:
a temperature sensor of the plurality of temperature sensor units is located at an intersection of the first virtual line and a fifth virtual line extending in the first direction; and
a temperature sensor of the plurality of temperature sensor units is located at an intersection of the second virtual line and the fifth virtual line, wherein the fifth virtual line is between one end of the battery and the other end of the battery.

6. The battery safety evaluation apparatus of claim 5, wherein there are a plurality of the fifth virtual lines.

7. The battery safety evaluation apparatus of claim 3, wherein a temperature sensor unit of the plurality of temperature sensor units is a rod shaped and extends in the vertical direction.

8. The battery safety evaluation apparatus of claim 7, wherein the temperature sensor unit comprises a first measurement point and a second measurement point, and
wherein the first measurement point is above the mounting plate, and
the second measurement point is below the mounting plate.

9. The battery safety evaluation apparatus of claim 8, wherein the temperature sensor unit further comprises a third measurement point, wherein the third measurement point is located between the first measurement point and the second measurement point, and
the third measurement point is above the mounting plate.

10. The battery safety evaluation apparatus of claim 7, wherein the chamber unit comprises:
a body unit having an opening in the second direction and comprising the battery accommodation space; and
a door unit coupled to the body unit and configured to cover the opening, and
wherein one end of the mounting plate in the second direction is coupled to a surface of the door unit facing the opening, and
the other end of the mounting plate in the second direction is in the battery accommodation space.

11. The battery safety evaluation apparatus of claim 10, wherein an upper end of a temperature sensor unit of the plurality of temperature sensor units is fixed to a ceiling surface of the chamber unit; and
a spacing between the first virtual line and the second virtual line is longer than a length of the mounting plate in the first direction.

12. The battery safety evaluation apparatus of claim 10, wherein a temperature sensor unit of the plurality of temperature sensor units are fixed to the mounting plate in a state of penetrating the mounting plate; and
a spacing between the first virtual line and the second virtual line is shorter than a length of the mounting plate in the first direction and longer than a length of the battery in the first direction.

13. The battery safety evaluation apparatus of claim 12, wherein the door unit includes a feed-through for connecting the plurality of temperature sensor units to the temperature analysis unit by wire.

14. The battery safety evaluation apparatus of claim 1, further comprising:
a lower jig having a bottom surface fixed on the upper surface of the mounting plate;
a first insulating layer between the battery and the lower jig;
an upper jig for pressurizing the upper surface of the battery;
a second insulating layer between the upper jig and the upper surface of the battery;
a bottom surface temperature measurement sensor between the first insulating layer and the battery; and
an upper surface temperature measurement sensor between the second insulating layer and the battery.

15. The battery safety evaluation apparatus of claim 14, further comprising:
a first fixing means for fixing the upper jig to the lower jig; and
a second fixing means for fixing the lower jig to the mounting plate.
